(19) Europäisches Patentamt / European Patent Office / Office européen des brevets

(11) **EP 4 729 375 A1**

(12) **EUROPEAN PATENT APPLICATION**

(43) Date of publication:
**22.04.2026 Bulletin 2026/17**

(21) Application number: **24207207.2**

(22) Date of filing: **17.10.2024**

(51) International Patent Classification (IPC):
**B60T 7/12** (2006.01)    **B60T 8/172** (2006.01)
**B60T 8/24** (2006.01)    **B60W 30/18** (2012.01)

(52) Cooperative Patent Classification (CPC):
**B60T 7/122; B60T 8/172; B60T 8/245;**
**B60W 30/181; B60W 30/18118;** B60T 2201/06;
B60T 2230/04; B60W 2552/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Autonomous Solutions AB**
**405 08 Göteborg (SE)**

(72) Inventor: **Goyal, Parul**
**417 22 Göteborg (SE)**

(74) Representative: **Valea AB**
**Box 1098**
**405 23 Göteborg (SE)**

(54) **A COMPUTER SYSTEM COMPRISING PROCESSING CIRCUITRY CONFIGURED TO ISSUE CONTROL DATA FOR CONTROLLING A VEHICLE WHEN TRAVELLING ON A SLOPE**

(57) The present disclosure relates to a computer system and a computer implemented method. The method comprises:
- identifying (S1) an upcoming braking event,
- obtaining (S2) driving condition information comprising information about an inclination of the slope (500), and vehicle information comprising information about a current vehicle weight,
- determining (S3) a set of braking torque levels to be delivered by the braking system (200) during the upcoming braking event, based on the driving condition information, wherein:
o in response to identifying that the inclination of the slope (500) is higher than an inclination threshold level, determining (S4) at least two braking torque levels for the set of braking torque levels, the two braking torque levels comprising a mild braking torque level and a hard braking torque level being higher than the mild braking torque level, wherein the hard braking torque level is intended to be applied after the mild braking torque level,

- issuing braking information to the braking system (200) to brake the vehicle (100) on the basis of the determined set of braking torque levels during the upcoming braking event.

FIG. 2

## Description

## TECHNICAL FIELD

The disclosure relates generally to a computer system, a vehicle and a computer-implemented method. In particular aspects, the disclosure relates to a computer system comprising processing circuitry configured to issue control data for controlling a vehicle when travelling on a slope. The disclosure also relates to a computer-implemented method for controlling a vehicle when travelling on a slope. Moreover, the disclosure relates to a vehicle, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Braking on a slope may be challenging and pose safety risks, particularly in scenarios where there is a potential risk of rollback. For instance, on a steep incline, gravity may cause a vehicle to roll backward if the brakes are not applied promptly and effectively. Moreover, when the vehicle needs to come to a halt, a sudden jerk may occur, posing significant safety issues. This may be particularly problematic for buses, where passengers typically do not have seat belts. In these situations, the passengers may be more susceptible to losing balance and sustaining injuries.

## SUMMARY

According to a first aspect of the disclosure, a computer system comprising processing circuitry configured to issue control data for controlling a vehicle when travelling on a slope is provided. The vehicle comprises a braking system adapted to produce a braking torque for slowing down the vehicle. The processing circuitry is further configured to:

- identify an upcoming braking event during which the vehicle is expected to change from a moving state to a stationary state,
- obtaining driving condition information comprising road characteristics information comprising information about an inclination of the slope, and vehicle information comprising information about a current vehicle weight,
- determining a set of braking torque levels to be delivered by the braking system during the upcoming braking event, based on the driving condition information, wherein:

    ○ in response to identifying that the inclination of the slope is higher than an inclination threshold level, determine at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

- issue braking information to the braking system to brake the vehicle on the basis of the determined set of braking torque levels during the upcoming braking event.

The first aspect of the disclosure may seek to improve handling of braking events on a slope, for instance, an uphill slope. For instance, by use of the driving condition information, a gravitational force acting on the vehicle along the slope may be estimated. This may allow for precise determination of a necessary braking force and/or braking torque level required to stop the vehicle on a slope. As a result, the vehicle may come to halt on the slope without the risk of rolling in an undesired direction.

Herein, mild braking may be understood as a gentle braking which may result in a relatively slow and smooth deceleration, while hard braking may be understood as a strong braking leading to a relatively rapid and significant deceleration, i.e., in contrast to the mild braking. Purely by way of examples, the mild braking torque level may refer to a level that may typically result in a deceleration in a range of -1 $m/s^2$ to -3 $m/s^2$. In contrast, the hard braking torque level may refer to a level that may typically result in a deceleration in a range of -3 $m/s^2$ to -5 $m/s^2$. Generally, mild braking is often sufficient for slopes with very slight inclines. However, when the inclination of the slope is higher than a critical level, it may be advantageous to plan for a mild braking level followed by a hard braking level. This may ensure that the braking event is performed in a smooth and safe manner, reducing the risk of rolling in an undesired direction by applying hard braking at the end of the braking process. A technical benefit may include improved handling of braking events on a slope.

Optionally in some examples, including in at least one preferred example, the mild braking torque level is further determined based on a first target deceleration, and wherein the hard braking torque level is further determined based on a second target deceleration. For instance, the first target deceleration may be set to a value that is within the range of -1 $m/s^2$ to -3 $m/s^2$, while the second target deceleration may be set to a value that is within the range of -3 $m/s^2$ to -5 $m/s^2$. A technical benefit may include that an appropriate hard braking torque level and mild braking torque level may be determined, respectively.

Optionally in some examples, including in at least one preferred example, the vehicle information further comprises at least one of the following parameters: a current vehicle speed, a current driving torque, a current rotational speed of an output shaft of a vehicle's transmission. By utilizing current vehicle information, it may be possible to estimate or predict these parameters during the braking event. This may allow for timely adjustments to the braking torque level, either during the braking event or prior to the braking event. A technical benefit may include that appropriate braking torque levels may be determined

Optionally in some examples, including in at least one preferred example, the processing circuitry is further configured to:

- during the braking event, in response to determining that a speed of the vehicle enters a predetermined speed range, determine that the braking torque level should be increased from the mild braking torque level to a subsequent braking torque level being higher than the mild braking torque level, and
- issue braking information to the braking system to increase the braking torque level accordingly.

The predetermined speed range may correspond to a range indicating that the vehicle is nearing a complete stop. By increasing the braking torque at this instant, the vehicle may be brought to a stop on the slope without the risk of rollback. A technical benefit may include an increased safety.

Optionally in some examples, including in at least one preferred example, the vehicle comprises a transmission that in turn comprises an output shaft connected to one or more wheels of the vehicle. The processing circuitry is further configured to:

- during the braking event, in response to determining that a rotational speed of the output shaft reaches a transmission output speed threshold, determine that the braking torque level should be increased from the mild braking torque level to a subsequent braking torque level being higher than the mild braking torque level,
- issue braking information to the braking system to increase the braking torque level accordingly.

The transmission output speed threshold may correspond to a critical speed indicating that the vehicle is nearing a complete stop. By increasing the braking torque at this instant, the vehicle may be brought to a stop on the slope without the risk of rollback. A technical benefit may include an increased safety.

Optionally in some examples, including in at least one preferred example, the vehicle comprises a transmission that in turn comprises an output shaft connected to one or more wheels of the vehicle. The processing circuitry is further configured to:

- during the braking event, in response to determining that a rate of change of the rotational speed of the output shaft is below a transmission output speed rate of change threshold, determine that the braking torque level should be increased from the mild braking torque level to a subsequent braking torque level being higher than the mild braking torque level, before the speed of the vehicle enters the predetermined speed range or before the rotational speed of the output shaft reaches a transmission output speed threshold, and

- issue braking information to the braking system to increase the braking torque level before the speed of the vehicle enters the predetermined speed range or before the rotational speed of the output shaft reaches a transmission output speed threshold accordingly.

The rate of change of the rotational speed may indicate how fast per second a vehicle is slowing down under a road condition. Experimental data shows that vehicles tend to decelerate slower on slippery surfaces due to reduced friction and grip as compared to dry roads. Hence, it may be possible to use the transmission output speed rate of change to evaluate a road condition and determine a risk of rollback. Herein, the transmission output speed rate of change threshold may correspond to an expected rate of change of the rotational speed of the output shaft when braking under normal conditions. If the actual rate of change of the rotational speed falls below this critical value, it may imply that a slippery road condition is detected, indicating an increased risk of rollback. By increasing the braking torque earlier than the speed of the vehicle enters the predetermined speed range or before the rotational speed of the output shaft reaches a transmission output speed threshold, this rollback risk may be reduced. A technical benefit may include an increased safety level.

Optionally in some examples, including in at least one preferred example, the subsequent braking torque level is the hard braking torque level.

Optionally in some examples, including in at least one preferred example, the subsequent braking torque level is an intermediate braking torque level being higher than the mild braking torque level but lower than the hard braking torque level. The intermediate braking torque level may be understood as a transition portion, allowing for a gradual shift from mild to hard braking. By incorporating the intermediate braking torque level, a sudden increase in braking pressure may be avoided, resulting in a smoother braking process. A technical benefit may include enhanced overall braking process.

Optionally in some examples, including in at least one preferred example, the braking information further comprises a mild braking time range during which mild braking torque level should be applied and a hard braking time range during which hard braking torque level should be applied.

Optionally in some examples, including in at least one preferred example, the braking information further comprises a shift point time instant at which the braking torque level should be increased from the mild braking torque level to a subsequent braking torque level being higher than the mild braking torque level. In these examples, the shift point may be determined in advance, e.g., prior to start of the braking event.

Optionally in some examples, including in at least one preferred example, the shift point time instant is determined based on at least one of: the inclination of the slope, the current vehicle weight and a risk of vehicle rolling in an opposite direction that the vehicle is intended to move. In these examples, the rollback risk may be evaluated using data from various sensors, including wheel slip sensors, wheel speed sensors, environmental sensors, such as those detecting snow or rain, and tire pressure monitoring systems. Generally, a higher risk of rollback may necessitate an earlier increase in braking torque levels. Similarly, a steeper slope and/or greater vehicle weight may indicate a higher gravitational force, which may also necessitate an earlier increase in braking torque levels. Thus, this time instant of the shift point may be appropriately determined based on these factors. A technical benefit may include that by planning the shift point at an appropriate time instant, the braking torque may be increased at an appropriate moment, resulting an enhanced safety level.

Optionally in some examples, including in at least one preferred example, the braking system comprises a friction braking system and an auxiliary braking system being auxiliary to the friction braking system. The braking information further comprises information that the mild braking torque level will be delivered by the auxiliary braking system.

Optionally in some examples, including in at least one preferred example, the braking information further comprises information that the hard braking torque level will be delivered at least partially by the friction braking system. By utilizing the auxiliary braking system for mild braking, it may reduce the reliance on friction brakes, which may decrease wear and extend the lifespan of components of the friction braking system. A technical benefit may include a longer service life of components of the friction braking system.

Optionally in some examples, including in at least one preferred example, the auxiliary braking system comprises one or more of the following: an engine braking system and a regenerative braking system. The regenerative braking system may convert at least a portion of the vehicle's kinetic energy into electric energy during a braking event, whereby the electric energy may be stored in an energy storage system and be used for powering various vehicle systems. A technical benefit may include that an overall energy efficiency may be enhanced.

Optionally in some examples, including in at least one preferred example, the vehicle further comprises an energy storage system adapted to receive electric energy converted by the auxiliary braking system during braking. The processing circuitry is further configured to:

- determine a state of energy level of the energy storage system, and
- determine the mild braking time range on the basis of the state of energy level of the energy storage system.

When the state of energy level is higher than an upper limit, e.g., batteries of the energy storage system are fully charged or close to fully charged, the regenerative braking may be disabled to reduce a risk of over charge of these batteries. Depending on the actual energy level, the mild braking time range may need to be decreased accordingly. Alternatively, mild braking torque level will be delivered by the engine braking system, if available, or by the friction braking system. A technical benefit may include that by reducing the risk of overcharging the batteries, overall vehicle safety may be further improved.

Optionally in some examples, including in at least one preferred example, the processing circuitry is further configured to:

- in response to identifying that the inclination of the slope is lower than or equal to the inclination threshold level, determine a single braking torque level for the set of braking torque levels, the single braking torque level being the mild braking torque level.

According to the second aspect of the disclosure, a vehicle is provided. The vehicle comprises the computer system according to the first aspect of the disclosure.

According to the third aspect of the disclosure, a computer-implemented method for controlling a vehicle when travelling on a slope is provided. The vehicle comprises a braking system adapted to produce a braking torque for slowing down the vehicle. The method comprises:

- identifying, by processing circuitry of a computer system, an upcoming braking event during which the vehicle is expected to change from a moving state to a stationary state,
- obtaining, by the processing circuitry, driving condition information comprising road characteristics information comprising information about an inclination of the slope, and vehicle information comprising information about a current vehicle weight,
- determining, by the processing circuitry, a set of braking torque levels to be delivered by the braking system during the upcoming braking event, based on the driving condition information, wherein:

  ◦ in response to identifying that the inclination of the slope is higher than an inclination threshold level, determining, by the processing circuitry, at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

- issuing by the processing circuitry, braking information to the braking system to brake the vehicle on the basis of the determined set of braking torque levels during the upcoming braking event.

Optionally in some examples, including in at least one preferred example, the mild braking torque level is further determined based on a first target deceleration, and wherein the hard braking torque level is further determined based on a second target deceleration.

Optionally in some examples, including in at least one preferred example, the vehicle information further comprises at least one of the following parameters: a current vehicle speed, a current driving torque, a current rotational speed of an output shaft of a vehicle's transmission or a current rate of change of a rotational speed of an output shaft of a vehicle's transmission.

Optionally in some examples, including in at least one preferred example, the method further comprises:

- during the braking event, in response to determining that a speed of the vehicle enters a predetermined speed range, determining, by the processing circuitry, that the braking torque level should be increased from the mild braking torque level to a subsequent braking torque level being higher than the mild braking torque level, and
- issuing, by the processing circuitry, braking information to the braking system to increase the braking torque level accordingly.

Optionally in some examples, including in at least one preferred example, the vehicle comprises a transmission that in turn comprises an output shaft connected to one or more wheels of the vehicle. The method further comprises:

- during the braking event, in response to determining that a rotational speed of the output shaft reaches a transmission output speed threshold, determining, by the processing circuitry, that the braking torque level should be increased from the mild braking torque level to a subsequent braking torque level being higher than the mild braking torque level,
- issuing, by the processing circuitry, braking information to the braking system to increase the braking torque level accordingly.

Optionally in some examples, including in at least one preferred example, the vehicle comprises a transmission that in turn comprises an output shaft connected to one or more wheels of the vehicle. The method further comprises:

- during the braking event, in response to determining that a rate of change of the rotational speed of the output shaft is below a transmission output speed rate of change threshold, determining, by the processing circuitry, that the braking torque level should be increased from the mild braking torque level to a subsequent braking torque level being higher than the mild braking torque level, before the speed of the vehicle enters the predetermined speed range or before the rotational speed of the output shaft reaches a transmission output speed threshold, and
- issuing, by the processing circuitry, braking information to the braking system to increase the braking torque level before the speed of the vehicle enters the predetermined speed range or before the rotational speed of the output shaft reaches a transmission output speed threshold accordingly.

Optionally in some examples, including in at least one preferred example, the subsequent braking torque level is the hard braking torque level.

Optionally in some examples, including in at least one preferred example, the subsequent braking torque level is an intermediate braking torque level being higher than the mild braking torque level but lower than the hard braking torque level.

Optionally in some examples, including in at least one preferred example, the braking information further comprises a mild braking time range during which mild braking torque level should be applied and a hard braking time range during which hard braking torque level should be applied.

Optionally in some examples, including in at least one preferred example, the braking information further comprises a shift point time instant at which the braking torque level should be increased from the mild braking torque level to a subsequent braking torque level being higher than the mild braking torque level.

Optionally in some examples, including in at least one preferred example, the shift point time instant is determined based on at least one of: the inclination of the slope, the current vehicle weight and a risk of vehicle rolling in an opposite direction that the vehicle is intended to move.

Optionally in some examples, including in at least one preferred example, the braking system comprises a friction braking system and an auxiliary braking system being auxiliary to the friction braking system. The braking information further comprises information that the mild braking torque level will be delivered by the auxiliary braking system.

Optionally in some examples, including in at least one preferred example, the braking information further comprises information that the hard braking torque level will be delivered at least partially by the friction braking system.

Optionally in some examples, including in at least one preferred example, the auxiliary braking system comprises one or more of the following: an engine braking system and a regenerative braking system.

Optionally in some examples, including in at least one preferred example, the vehicle further comprises an energy storage system adapted to receive electric energy converted by the auxiliary braking system during braking, and wherein method further comprises:

- determining, by the processing circuitry, a state of energy level of the energy storage system, and
- determining the mild braking time range on the basis of the state of energy level of the energy storage system.

Optionally in some examples, including in at least one preferred example, the method further comprises:

- in response to identifying that the inclination of the slope is lower than or equal to the inclination threshold level, determining, by the processing circuitry, a single braking torque level for the set of braking torque levels, the single braking torque level being the mild braking torque level.

According to a fourth aspect of the disclosure, a computer program product is provided. The computer program product comprises program code for performing, when executed by the processing circuitry, the method according to the third aspect of the disclosure.

According to a fifth aspect of the disclosure, a non-transitory computer-readable storage medium is provided. The storage medium comprises instructions, which when executed by the processing circuitry, cause the processing circuitry to perform the method according to the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

BRIEF DESCRIPTION OF THE DRAWINGS

Examples are described in more detail below with reference to the appended drawings.

FIG. 1 is an exemplary vehicle in a schematic side view according to an example.

FIG.2 shows a scenario when a vehicle is travelling on a slope according to an example.

FIG. 3 - FIG. 6 are exemplary flow charts illustrating actions involved in a method for issuing control data for controlling a vehicle when travelling on a slope according to examples.

FIG. 7 is an example of braking information.

FIG. 8 is an example of a vehicle speed profile when braking on a normal road.

FIG. 9 is an example of a vehicle speed profile when braking on a icy road.

FIG. 10 and FIG. 11 are examples of vehicle speed profiles for different conditions.

FIG. 12 is a schematic diagram of an exemplary computer system for implementing methods disclosed herein.

DETAILED DESCRIPTION

The detailed description set forth below provides information and examples of the disclosed technology with sufficient detail to enable those skilled in the art to practice the disclosure.

Braking on a slope may be challenging and pose safety risks, particularly in scenarios where there is a potential risk of rollback. For instance, on a steep incline, gravity may cause a vehicle to roll backward if the brakes are not applied promptly and effectively. Moreover, when the vehicle needs to come to a halt, a sudden jerk may occur, posing significant safety issues. This may be particularly problematic for buses, where passengers typically do not have seat belts. In these situations, the passengers may be more susceptible to losing balance and sustaining injuries. The present disclosure may seek to improve handling of braking events on a slope. A technical benefit may include increased safety.

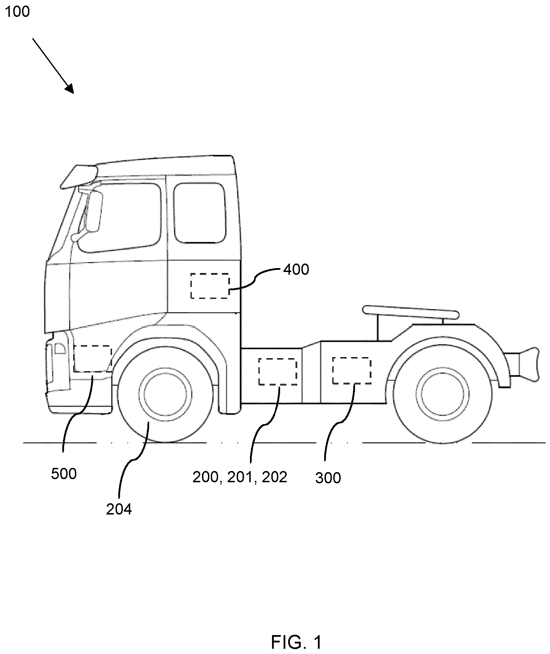

FIG. 1 depicts a vehicle 100, which is exemplified by a truck. Even though a truck is shown, it shall be noted that the disclosure is not limited to this type of vehicle, but it may also be used for other vehicles, such as a bus, construction equipment, e.g., a wheel loader or an excavator. The present disclosure may be applicable for electric vehicles, or internal combustion engine vehicles. The present disclosure may also be applicable for a hybrid vehicle, e.g. a vehicle which comprises a combustion engine and an electric machine. Moreover, the vehicle 100 may be an autonomous vehicle that may take decisions without a human user's input. The vehicle 100 may use data from various sensors and artificial intelligence (AI) technology to make decisions and control operation of the vehicle 100 autonomously, for instance, during a braking event. The vehicle 100 may also be a semi-autonomous vehicle that at least partly take decisions without explicit a human user's input. The vehicle 100 may perform driving tasks with limited human intervention, whereby the human user may still be required to supervise operation of the vehicle 100 and take control when necessary. Alternatively, the vehicle 100 may be a human-driven vehicle.

The vehicle 100 comprises a power unit 500, for instance comprising an electric motor, which may provide propulsion power or a driving torque to the vehicle 100 via a transmission (not shown). The transmission may convert a torque generated by the power unit 500 to a torque that is suitable for driving a set of the wheels 204 and transfer the torque to the set of the wheels 204. The transmission may comprise a plurality of gears and may be adapted to individually engage each one of a plurality of gears, as needed. Each one of the gears may correspond to a ratio between a rotational speed of an input shaft connected to the power unit 500 and an output shaft connected to a drive shaft associated with the set of wheels 204, and by selecting different gears, the torque transmitted to the wheels 204 can be regulated. As a result, the speed of the vehicle 100 can be controlled.

Moreover, the vehicle 100 comprises a braking system 200 adapted to produce a braking torque for slowing down the vehicle 100. In the shown example, the braking system 200 comprises a friction braking system 201 and an auxiliary braking system 202 being auxiliary to the friction braking system 200. The friction braking system 201, typically understood as a primary braking system, may rely on mechanical friction to slow down or to stop the vehicle 100. Purely by way of example, the friction braking may be achieved by applying a friction force, such as by pressing brake pads, against rotating components, such as drums or discs attached to vehicle wheels. Moreover, the auxiliary braking system 202, typically understood as a secondary braking system, may be configured to provide extra braking torque or to assist the primary braking system 201. The auxiliary braking system 202 may in turn comprise at least one of an engine braking system (not shown) and a regenerative braking system (not shown). The regenerative braking system may be adapted to convert at least a portion of the vehicle's kinetic energy into electric energy during a braking event. Purely by way example, the power system 500, for instance if comprising an electric motor, may be controlled to function as a generator, recapturing energy that would otherwise be lost as heat during braking. The vehicle 100 may further comprise an energy storage system 300 adapted to receive electric energy converted by the auxiliary braking system 202 during braking. The energy storage system 300 may comprise one or more traction batteries, whereby the electric motor of the power system 500 may transfer the electric energy to the energy storage system 300 by charging the one or more traction batteries. When the one or more traction batteries are fully charged or close to fully charged, the regenerative braking system may be disabled so as not to overcharge the batteries.

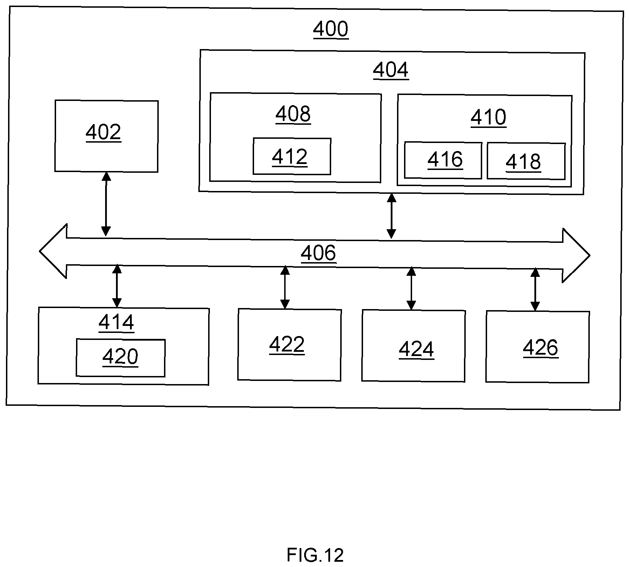

Furthermore, the vehicle 100 comprises a computer system 400, which may comprise one or more control units, such as processing circuitry 402 (see FIG. 12) that can issue control data for controlling the braking system 200. The computer system 400 may be adapted to communicate with the braking system 200 and possibly also the power unit 500.

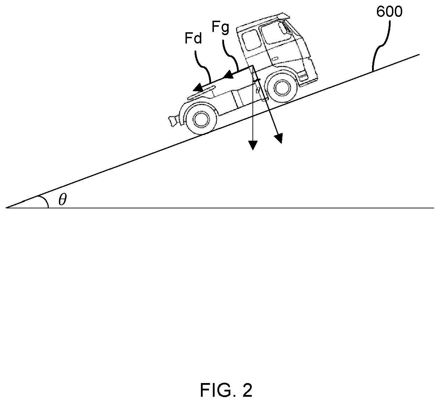

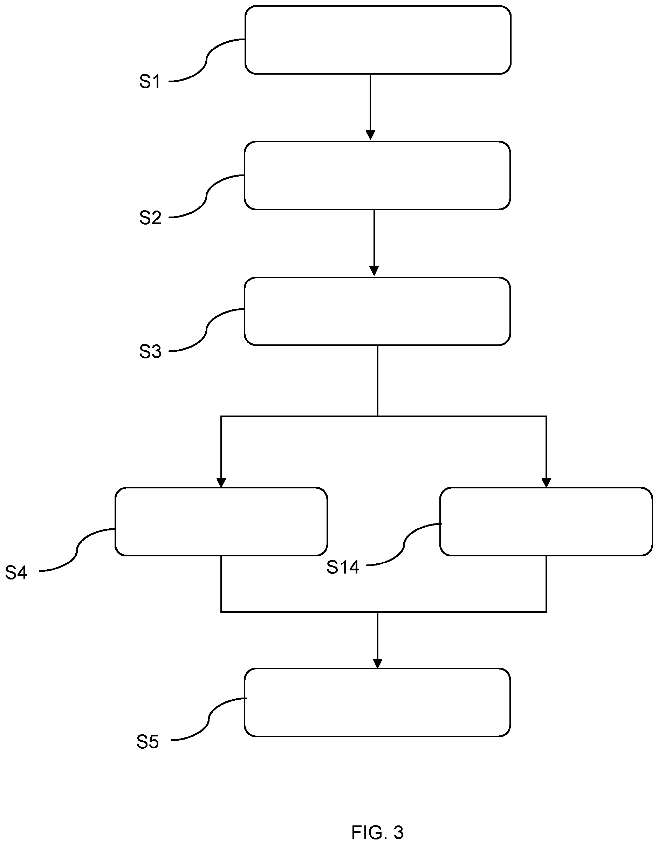

**FIG. 2** shows a scenario when a vehicle 100 is travelling on an uphill slope 600, and **FIG. 3 - FIG. 6** illustrate flowcharts of actions involved in a method for issuing control data for controlling a vehicle when travelling on the slope 600. The method may be performed by processing circuitry of a computer system 400, such as the vehicle onboard computer system 400. The method comprises the actions listed in the following, which, unless otherwise indicated, may be taken in any suitable order.

S1: identifying an upcoming braking event during which the vehicle is expected to change from a moving state to a stationary state. The identification may be performed with assistance of any suitable sensors, such as GPS sensors and/or vehicle environmental sensors. For instance, if the vehicle 100 is a bus, a braking event may be identified if a sign of a bus stop is detected by the environmental sensors. As another example, a braking event may be identified based on traffic light information/data received from the vehicle environmental sensors.

S2: obtaining driving condition information comprising road characteristics information comprising information about an inclination of the slope 600, and vehicle information comprising information about a current vehicle weight. This information may be obtained from various vehicle on-board sensors including but not limited to axle load sensors, inclinometers, accelerometers, and/or GPS sensors. For instance, the current vehicle weight may be determined by estimating a sum of axle weight measured by axle load sensors. Alternatively, the axle weight may be determined based on pressure within a vehicle suspension using appropriate pressure sensors. In this way, a real-time vehicle weight information may be obtained. Moreover, the inclination of the slope 600 information may be obtained by estimating a slope inclination angle $\theta$, which may refer to an angle $\theta$ between a horizontal plane of a level ground and the surface of the slope 600. Purely by way of example, the slope inclination angle $\theta$ may be estimated based on a gravitational acceleration measured by accelerometers. For instance, using the FIG. 2 vehicle as an example, the gravitational force Fg acting parallel to the slope can expressed by:

$$F_g = m \cdot g \cdot \sin(\theta) = m \cdot a_g$$

where m is mass of the vehicle which is dependent on a current weight of the vehicle, g is the acceleration due to gravity and $a_g$ is the acceleration in a gravitational direction. By inserting the gravitational acceleration measured by the accelerometers, the slope inclination angle θ may be estimated accordingly.

In some other examples, tilt sensors or inclinometers may also be used to estimate the slope inclination angle θ. The tilt sensors or inclinometers may measure an angle between a direction of gravity and a vertical axis of the vehicle 100, which may be equivalent to the slope inclination angle θ.

S3: determining a set of braking torque levels to be delivered by the braking system 200 during the upcoming braking event, based on the driving condition information.

S4: in response to identifying that the inclination of the slope 500 is higher than an inclination threshold level, determining at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level.

S5: issuing, braking information to the braking system 200 to brake the vehicle (100) on the basis of the determined set of braking torque levels during the upcoming braking event.

In some examples, the mild braking torque level is further determined based on a first target deceleration, and the hard braking torque level is further determined based on a second target deceleration. The first target deceleration may correspond to a speed reduction value selected from the range of -1 m/s$^2$ to -3m/s$^2$, which may be associated with mild acceleration. The second target deceleration may correspond to a speed reduction value selected from the range of -3 m/s$^2$ to -5 m/s$^2$, which may be associated with hard acceleration.

Using the FIG. 3 vehicle as an example, the gravitational force Fg acting parallel to the slope and opposing motion of the vehicle can be estimated based on the information about the inclination of the slope, such as the slope inclination angle θ and the current vehicle weight using the below formula:

$$F_g = m \cdot g \cdot \sin(\theta)$$

where m is mass of the vehicle which is dependent on a current weight of the vehicle, g is the acceleration due to gravity and θ is the slope inclination angle θ.

Based on the first and second target deceleration, a braking force for each one of mild braking and hard braking may be determined. For instance, the braking force is the sum of the force to overcome the gravitational force Fg and the force $F_d$ to decelerate the vehicle 100 on the slope, and may be determined by:

$$F_m = m \cdot a_m + F_g$$

$$F_h = m \cdot a_h + F_g$$

where $F_m$ is a braking force determined for mild braking, $a_m$ is the first target deceleration, $F_h$ is a braking force determined for hard braking, $a_h$ is the second target deceleration.

The two braking torque levels may then be determined accordingly.

In some examples, the slope inclination angle θ and/or the current vehicle weight may be classified into different categories, such as low, medium, and high level. Instead of continuously calculating or updating the braking torque levels based on the changing parameters, predetermined braking torque levels may be assigned to each category.

If the inclination of the slope 500 is below the inclination threshold level, indicating a very slight inclination, the method may further comprise:

S14: in response to identifying that the inclination of the slope 500 is lower than or equal to inclination threshold level, determining a single braking torque level for the set of braking torque levels, the single braking torque level being the mild braking torque level.

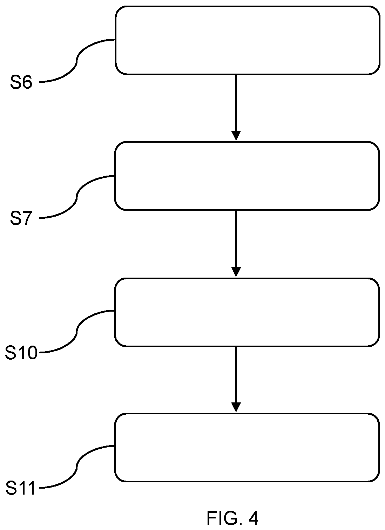

In some examples, the method may further comprise the following actions as presented in FIG. 4:

S6: during the braking event, in response to determining that a speed of the vehicle enters a predetermined speed range, determining that the braking torque level should be increased from the mild braking torque level to a subsequent braking torque level being higher than the mild braking torque level,

S7: issuing braking information to the braking system 200 to increase the braking torque level accordingly.

The predetermined speed range may correspond to a range indicating that the vehicle is nearing a complete stop, and it may be preferred to increase the braking torque level at this time instant to ensure the complete stop.

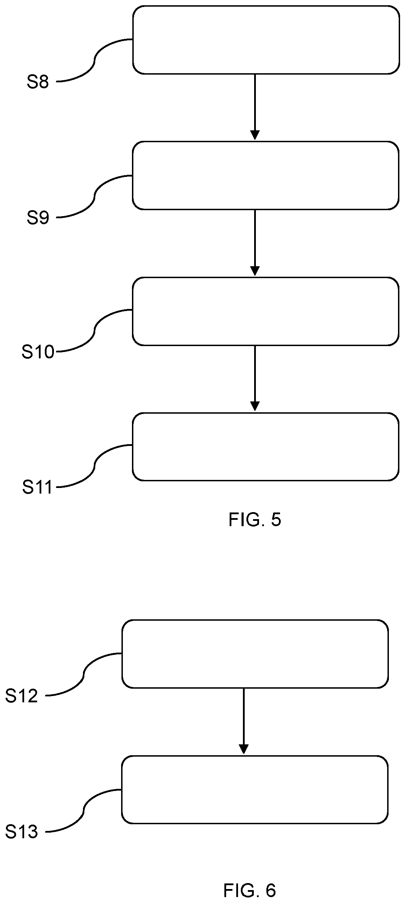

Alternatively, it may be possible to use the rotational speed of the output shaft to evaluate whether the vehicle is nearing a complete stop. The method may further comprise the following actions as presented in FIG. 5:

S8: during the braking event, in response to determining that a rotational speed of the output shaft reaches a transmission output speed threshold, determining that the braking torque level should be increased from the mild braking torque level to a subsequent braking torque level being higher than the mild braking torque level,

S9: issuing braking information to the braking system 200 to increase the braking torque level accordingly.

The method may further comprise:

S10: during the braking event, in response to determining that a rate of change of the rotational speed of the output shaft is below a transmission output speed rate of change threshold, determining that the braking torque level should be increased from the mild braking torque level to a subsequent braking torque level being higher than the mild braking torque level, before the speed of the vehicle enters the predetermined speed range or before the rotational speed of the output shaft reaches a transmission output speed threshold, and

S11: issuing braking information to the braking system 200 to increase the braking torque level before the speed of the vehicle enters the predetermined speed range or before the rotational speed of the output shaft reaches a transmission output speed threshold accordingly.

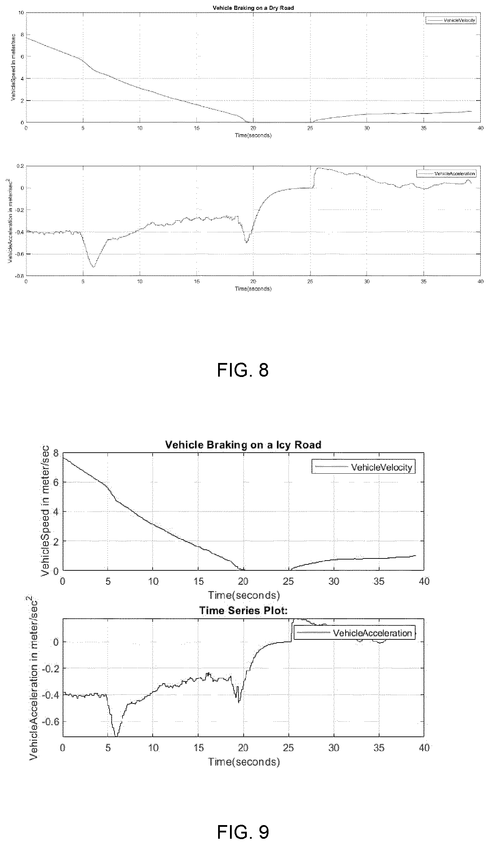

Experimental data shows that vehicles tend to decelerate slower on slippery surfaces due to reduced friction and grip as compared to dry roads. For instance, FIG. 8 illustrates a vehicle speed profile when the vehicle is braking on a dry road, while FIG. 9 illustrates a vehicle speed profile when the same vehicle is braking on a icy road. As shown in the figures, the rate of change of the vehicle speed is faster when the vehicle is braking on a dry road as compared to a icy road, during the braking. Hence, it may be possible to use the transmission output speed rate of change to evaluate a road condition and thereby determine a risk of rollback. Herein, the transmission output speed rate of change threshold may correspond to an expected transmission output speed rate of change when braking under normal conditions. If the actual rate of change of the rotational speed falls below this critical value, it may suggest that a slippery road condition is detected, indicating an increased risk of rollback. As a result, the braking torque should be increased before the speed of the vehicle enters the predetermined speed range.

In some examples, the subsequent braking torque level is the hard braking torque level. As another non-limited example, the subsequent braking torque level is an intermediate braking torque level being higher than the mild braking torque level but lower than the hard braking torque level. The intermediate braking torque level may be understood as a transition portion, allowing for a gradual shift from mild to hard braking to avoid a sudden increase in braking pressure.

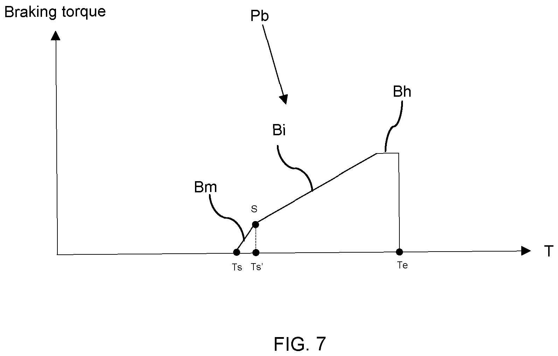

FIG. 7 shows an example of the braking information presented as a braking profile. The vertical axis defines a braking torque level, and the horizontal axis is time instant. As shown in the figure, the braking information comprises at least two braking torque levels including a mild braking torque level $B_m$ and a hard braking torque level $B_h$ being higher than the mild braking torque level. The hard braking torque level is intended to be applied after the mild braking torque level. The mild and/or braking torque levels may be constant or varying, such as gradually increasing at an increasing rate.

Additionally, the braking information further comprises an intermediate braking torque level being higher than the mild braking torque level but lower than the hard braking torque level. During the braking event, the braking torque level may start to increase at a time instant when it is detected that the vehicle speed or the rotational speed of the output shaft reaches the predetermined range or the lower limit. This braking information may be continuously fed to the braking system 200 both before and throughout the entire braking event.

Moreover, in some examples, the braking information may further comprise a mild braking time range during which mild braking torque level should be applied and a hard braking time range during which hard braking torque level should be applied.

The braking information may further comprise a shift point time instant at which the braking torque level should be increased from the mild braking torque level to a subsequent braking torque level being higher than the mild braking torque level. The shift point time instant may be determined based on at least one of: the inclination of the slope 600, the current vehicle weight and a risk of vehicle 100 rolling in an opposite direction that the vehicle 100 is intended to move.

In these examples, the shift point may be predetermined during a planning phase, and the information may be issued to the braking system 200 prior to the upcoming braking event. For instance, the shift point time instant may be determined at a time instant when the vehicle speed is predicted to reach the predetermined range. Moreover, the shift point time instant may be further adjusted based on the inclination of the slope 600, the current vehicle weight and a risk of vehicle 100 rolling in an opposite direction that the vehicle 100 is intended to move. Herein, the risk of vehicle 100 rolling in an opposite direction that the vehicle 100 is intended to move may be evaluated using data from various sensors, including wheel slip sensors, wheel speed sensors, environmental sensors, such as those detecting snow or rain, and tire pressure monitoring systems. Generally, a higher risk of rollback may necessitate an earlier increase in braking torque levels. Similarly, a steeper slope and/or greater vehicle weight typically result in increased gravitational force, which may also require an earlier increase in braking torque levels.

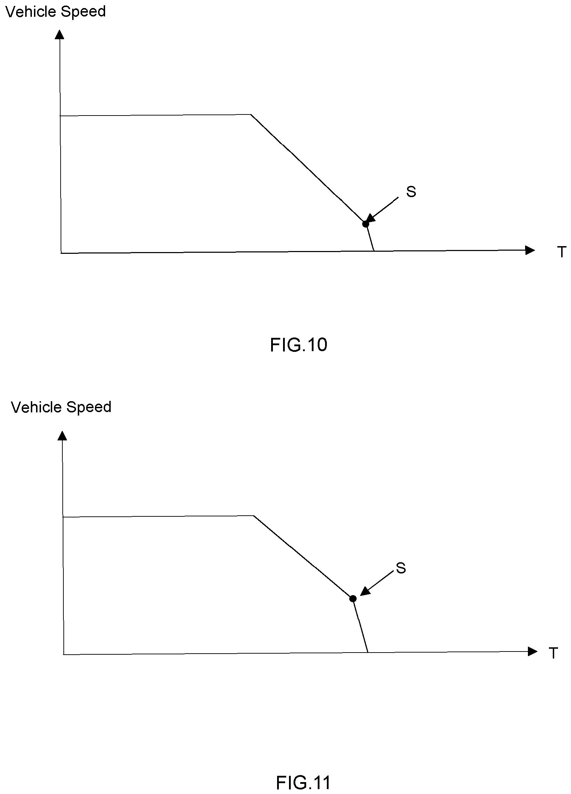

FIG. 10 and FIG. 11 are examples of vehicle speed profiles planned for different conditions. The vehicle speed profiles may be seen as a result of the determined braking torque levels, as the vehicle speed may reflect the outcomes of the braking torque applied according to the braking information. It can be envisaged that the FIG. 11 speed profile is for the condition with a higher gradient of the slope, or a greater vehicle weight and/or an increase rollback risk as compared to the condition for **FIG. 10,** as the shift point S has been set to be earlier than the shift point S for **FIG. 10.**

In some examples, the braking information further comprise information that the hard braking torque level will be delivered at least partially by the friction braking system. Moreover, the braking information may further comprise information that the mild braking torque level will be delivered by the auxiliary braking system 202. In particular, the mild braking torque will be delivered by the regenerative braking system. Thus, the method may further comprise the following action as presented in FIG. 6:

S12: determining a state of energy level of the energy storage system, and

S13: determining the mild braking time range on the basis of the state of energy level of the energy storage system 100.

When the state of energy level is higher than an upper limit, e.g., batteries of the energy storage system are fully charged or close to fully charged, the regenerative braking may be disabled to reduce a risk of over charge of these batteries. Depending on the actual energy level, the mild braking time range may need to be decreased accordingly. Alternatively, the mild braking torque level will be delivered by the engine braking system, if available, or by the friction braking system.

Although it has been realized that the method has significant advantages for uphill scenarios, it may also be possible to implement the method for downhill scenarios. In other words, the method is also applicable for braking on a downhill slope.

**FIG 12.** illustrates a computer system 400 for performing the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include nonvolatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.

Example 1: A computer system (400) comprising processing circuitry (402) configured to issue control data for controlling a vehicle (100) when travelling on a slope (500), wherein the vehicle (100) comprises a braking system (200) adapted to produce a braking torque for slowing down the vehicle (100), the processing circuitry (402) being further configured to:

- identify an upcoming braking event during which the vehicle (100) is expected to change from a moving state to a stationary state,
- obtaining driving condition information comprising road characteristics information comprising information about an inclination of the slope (500), and vehicle information comprising information about a current vehicle weight,
- determining a set of braking torque levels to be delivered by the braking system (200) during the upcoming braking event, based on the driving condition information, wherein:

    ○ in response to identifying that the inclination of the slope (500) is higher than an inclination threshold level, determine at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

- issue braking information to the braking system (200) to brake the vehicle (100) on the basis of the determined set of braking torque levels during the upcoming braking event.

Example 2: A vehicle (100) comprising the computer system (400) of Example 1.

Example 3: A computer-implemented method for controlling a vehicle (100) when travelling on a slope (500), wherein the vehicle (100) comprises a braking system (200) adapted to produce a braking torque for slowing down the vehicle (100), the method comprising:

- identifying (S1), by processing circuitry (402) of a computer system (400), an upcoming braking event during which the vehicle (100) is expected to change from a moving state to a stationary state,

- obtaining (S2), by the processing circuitry (402), driving condition information comprising road characteristics information comprising information about an inclination of the slope (500), and vehicle information comprising information about a current vehicle weight,
- determining (S3), by the processing circuitry (402), a set of braking torque levels to be delivered by the braking system (200) during the upcoming braking event, based on the driving condition information, wherein:

   ○ in response to identifying that the inclination of the slope (500) is higher than an inclination threshold level, determining (S4), by the processing circuitry (402), at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

- issuing, (S5), by the processing circuitry (402), braking information to the braking system (200) to brake the vehicle (100) on the basis of the determined set of braking torque levels during the upcoming braking event.

Example 4: The method of Example 3, wherein the mild braking torque level is further determined based on a first target deceleration, and wherein the hard braking torque level is further determined based on a second target deceleration.

Example 5: The method of any one of Examples 3-4, wherein the vehicle information further comprises at least one of the following parameters: a current vehicle speed, a current driving torque, a current rotational speed of an output shaft of a vehicle's transmission or a current rate of change of a rotational speed of an output shaft of a vehicle's transmission.

Example 6: The method of any one of Examples 3- 5, wherein the method further comprises:

- during the braking event, in response to determining that a speed of the vehicle enters a predetermined speed range, determining (S6), by the processing circuitry (402), that the braking torque level should be increased from the mild braking torque level to a subsequent braking torque level being higher than the mild braking torque level, and
- issuing (S7), by the processing circuitry (402), braking information to the braking system (200) to increase the braking torque level accordingly.

Example 7: The method of any one of Examples 3 - 6, wherein the vehicle comprises a transmission that in turn comprises an output shaft connected to one or more wheels of the vehicle, wherein the method further comprises:

- during the braking event, in response to determining that a rotational speed of the output shaft reaches a transmission output speed threshold, determining (S8), by the processing circuitry (402), that the braking torque level should be increased from the mild braking torque level to a subsequent braking torque level being higher than the mild braking torque level,
- issuing (S9), by the processing circuitry (402), braking information to the braking system (200) to increase the braking torque level accordingly.

Example 8: The method of any one of Examples 6-7, wherein the vehicle comprises a transmission that in turn comprises an output shaft connected to one or more wheels of the vehicle, wherein the method further comprises:

- during the braking event, in response to determining that a rate of change of the rotational speed of the output shaft is below a transmission output speed rate of change threshold, determining (S10), by the processing circuitry (402), that the braking torque level should be increased from the mild braking torque level to a subsequent braking torque level being higher than the mild braking torque level, before the speed of the vehicle enters the predetermined speed range or before the rotational speed of the output shaft reaches a transmission output speed threshold, and
- issuing (S11), by the processing circuitry (402), braking information to the braking system (200) to increase the braking torque level before the speed of the vehicle enters the predetermined speed range or before the rotational speed of the output shaft reaches a transmission output speed threshold accordingly.

Example 9: The method of any one of Examples 5-8, wherein the subsequent braking torque level is the hard braking torque level.
Example 10: The method of any one of Examples 5 -8, wherein the subsequent braking torque level is an intermediate braking torque level being higher than the mild braking torque level but lower than the hard braking torque level.
Example 11: The method of any one of Examples 3-5, wherein the braking information further comprises a mild braking time range during which mild braking torque level should be applied and a hard braking time range during which hard braking torque level should be applied.
Example 12: The method of Example 11, wherein the braking information further comprises a shift point time instant at which the braking torque level should be increased from the mild braking torque level to a subsequent braking torque level being higher than the mild braking torque level.

Example 13: The method of Example 12, wherein the shift point time instant is determined based on at least one of: the inclination of the slope (500), the current vehicle weight and a risk of vehicle (100) rolling in an opposite direction that the vehicle (100) is intended to move.

Example 14: The method of any one of Examples 3 - 13, wherein the braking system (200) comprises a friction braking system (201) and an auxiliary braking system (202) being auxiliary to the friction braking system (200), and wherein the braking information further comprises information that the mild braking torque level will be delivered by the auxiliary braking system (202).

Example 15: The method of Example 14, wherein the braking information further comprises information that the hard braking torque level will be delivered at least partially by the friction braking system (201).

Example 16: The method of any one of Examples 14-15, wherein the auxiliary braking system (200) comprises one or more of the following: an engine braking system and a regenerative braking system.

Example 17: The method of Example 16, when dependent on Example 11, wherein the vehicle (100) further comprises an energy storage system (300) adapted to receive electric energy converted by the auxiliary braking system (202) during braking, and wherein method further comprises:

- determining (S12), by the processing circuitry (402), a state of energy level of the energy storage system (300), and
- determining (S13) the mild braking time range on the basis of the state of energy level of the energy storage system (300).

Example 18: The method of any one of Example 3 or Example 17, wherein the method further comprises:

- in response to identifying that the inclination of the slope (500) is lower than or equal to inclination threshold level, determining (S14), by the processing circuitry (402), a single braking torque level for the set of braking torque levels, the single braking torque level being the mild braking torque level.

Example 19: A computer program product comprising program code for performing, when executed by the processing circuitry (402), the method of any of Examples 3-18.

Example 20: A non-transitory computer-readable storage medium comprising instructions, which when executed by the processing circuitry (402), cause the processing circuitry (402) to perform the method of any of Examples 3-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to issue control data for controlling a vehicle (100) when travelling on a slope (500), wherein the vehicle (100) comprises a braking system (200) adapted to produce a braking torque for slowing down the vehicle (100), the processing circuitry (402) being further configured to:

   - identify an upcoming braking event during which the vehicle (100) is expected to change from a moving state to a stationary state,
   - obtaining driving condition information comprising road characteristics information comprising information about an inclination of the slope (500), and vehicle information comprising information about a current vehicle weight,
   - determining a set of braking torque levels to be delivered by the braking system (200) during the upcoming braking event, based on the driving condition information, wherein:

     ○ in response to identifying that the inclination of the slope (500) is higher than an inclination threshold level, determine at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

   - issue braking information to the braking system (200) to brake the vehicle (100) on the basis of the determined set of braking torque levels during the upcoming braking event.

2. A vehicle (100) comprising the computer system (400) of claim 1.

3. A computer-implemented method for controlling a vehicle (100) when travelling on a slope (500), wherein the vehicle (100) comprises a braking system (200) adapted to produce a braking torque for slowing down the vehicle (100), the method comprising:

   - identifying (S1), by processing circuitry (402) of a computer system (400), an upcoming braking event during which the vehicle (100) is expected to change from a moving state to a stationary state,
   - obtaining (S2), by the processing circuitry (402), driving condition information comprising road characteristics information comprising information about an inclination of the slope (500), and vehicle information comprising information about a current vehicle weight,
   - determining (S3), by the processing circuitry (402), a set of braking torque levels to be delivered by the braking system (200) during the upcoming braking event, based on the driving condition information, wherein:

     ○ in response to identifying that the inclination of the slope (500) is higher than an inclination threshold level, determining (S4), by the processing circuitry (402), at least two braking torque levels for the set of braking torque levels, the two braking torque levels comprising a mild braking torque level and a hard braking torque level, the hard braking torque level being higher than the mild braking torque level, wherein the hard braking torque level is intended to be applied after the mild braking torque level,

   - issuing, (S5), by the processing circuitry (402), braking information to the braking system (200) to brake the vehicle (100) on the basis of the determined set of braking torque levels during the upcoming braking event.

4. The method of claim 3, wherein the mild braking torque level is further determined based on a first target deceleration, and wherein the hard braking torque level is further determined based on a second target deceleration.

5. The method of any one of claims 3- 4, wherein the method further comprises:

   - during the braking event, in response to determining that a speed of the vehicle enters a predetermined speed range, determining (S6), by the processing circuitry (402), that the braking torque level should be increased from the mild braking torque level to a subsequent braking torque level being higher than the mild braking torque level, and
   - issuing (S7), by the processing circuitry (402), braking information to the braking system (200) to increase the braking torque level accordingly.

6. The method of any one of claims 3-5, wherein the vehicle comprises a transmission that in turn comprises an output shaft connected to one or more wheels of the vehicle, wherein the method further comprises:

   - during the braking event, in response to determining that a rotational speed of the output shaft reaches a transmission output speed threshold, determining (S8), by the processing circuitry (402), that the braking torque level should be increased from the mild braking torque level to a subsequent braking torque level being higher than the mild braking torque level,
- issuing (S9), by the processing circuitry (402), braking information to the braking system (200) to increase the braking torque level accordingly.

7. The method of any one of claims 5-6, wherein the vehicle comprises a transmission that in turn comprises an output shaft connected to one or more wheels of the vehicle, wherein the method further comprises:

- during the braking event, in response to determining that a rate of change of the rotational speed of the output shaft is below a transmission output speed rate of change threshold, determining (S10), by the processing circuitry (402), that the braking torque level should be increased from the mild braking torque level to a subsequent braking torque level being higher than the mild braking torque level, before the speed of the vehicle enters the predetermined speed range or before the rotational speed of the output shaft reaches a transmission output speed threshold, and
- issuing (S 1 1), by the processing circuitry (402), braking information to the braking system (200) to increase the braking torque level before the speed of the vehicle enters the predetermined speed range or before the rotational speed of the output shaft reaches a transmission output speed threshold accordingly.

8. The method of any one of claims 4-7, wherein the subsequent braking torque level is the hard braking torque level.

9. The method of any one of claims 4 -7, wherein the subsequent braking torque level is an intermediate braking torque level being higher than the mild braking torque level but lower than the hard braking torque level.

10. The method of any one of claims 3-9, wherein the braking system (200) comprises a friction braking system (201) and an auxiliary braking system (202) being auxiliary to the friction braking system (200), and wherein the braking information further comprises information that the mild braking torque level will be delivered by the auxiliary braking system (202).

11. The method of claim 10, wherein the braking information further comprises information that the hard braking torque level will be delivered at least partially by the friction braking system (201).

12. The method of any one of claims 10-11, wherein the auxiliary braking system (200) comprises one or more of the following: an engine braking system and a regenerative braking system.

13. The method of claim 10, when dependent on claim 12, wherein the vehicle (100) further comprises an energy storage system (300) adapted to receive electric energy converted by the auxiliary braking system (202) during braking, and wherein method further comprises:

- determining (S12), by the processing circuitry (402), a state of energy level of the energy storage system (300), and
- determining (S13) the mild braking time range on the basis of the state of energy level of the energy storage system (300).

14. A computer program product comprising program code for performing, when executed by the processing circuitry (402), the method of any of claims 3-13.

15. A non-transitory computer-readable storage medium comprising instructions, which when executed by the processing circuitry (402), cause the processing circuitry (402) to perform the method of any of claims 3-13.

100

400

500

204

200, 201, 202    300

FIG. 1

FIG. 2

FIG. 3

S6

S7

S10

S11

FIG. 4

FIG. 5

FIG. 6

FIG. 7

FIG. 8

FIG. 9

Vehicle Speed

FIG.10

Vehicle Speed

FIG.11

FIG.12

Europäisches
Patentamt
European
Patent Office
Office européen
des brevets

# EUROPEAN SEARCH REPORT

**Application Number**

EP 24 20 7207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/034288 A1 (YUAN BAOPING [US] ET AL) 1 February 2024 (2024-02-01) * paragraph [0030] - paragraph [0077] * ----- | 1-15 | INV. B60T7/12 B60T8/172 B60T8/24 B60W30/18 |
| A | US 2024/270220 A1 (HEIDL CHRISTIAN [DE]) 15 August 2024 (2024-08-15) * the whole document * ----- | 1-15 | |
| A | US 2018/134292 A1 (ALPMAN ERIK [DE] ET AL) 17 May 2018 (2018-05-17) * the whole document * ----- | 1-15 | |
| A | US 2022/289153 A1 (ZHANG XIANHUI [CN] ET AL) 15 September 2022 (2022-09-15) * the whole document * ----- | 1-15 | |
| A | CN 115 384 505 A (IP TRANS HOLDINGS CO LTD) 25 November 2022 (2022-11-25) * the whole document * ----- | 1-15 | |

**TECHNICAL FIELDS SEARCHED (IPC)**

B60T
B60W

The present search report has been drawn up for all claims

| Place of search | Date of completion of the search | Examiner |
|---|---|---|
| Munich | 1 April 2025 | Graniou, Marc |

EPO FORM 1503 03.82 (P04C01)

## ANNEX TO THE EUROPEAN SEARCH REPORT
## ON EUROPEAN PATENT APPLICATION NO.

EP 24 20 7207

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| US 2024034288 | A1 | 01-02-2024 | CN | 116811871 A | 29-09-2023 |
| | | | US | 2024034288 A1 | 01-02-2024 |
| US 2024270220 | A1 | 15-08-2024 | CN | 117460652 A | 26-01-2024 |
| | | | DE | 102021115955 A1 | 22-12-2022 |
| | | | US | 2024270220 A1 | 15-08-2024 |
| | | | WO | 2022268408 A1 | 29-12-2022 |
| US 2018134292 | A1 | 17-05-2018 | CN | 108068784 A | 25-05-2018 |
| | | | DE | 102016222172 B3 | 17-05-2018 |
| | | | US | 2018134292 A1 | 17-05-2018 |
| US 2022289153 | A1 | 15-09-2022 | CN | 112896119 A | 04-06-2021 |
| | | | EP | 4056433 A1 | 14-09-2022 |
| | | | US | 2022289153 A1 | 15-09-2022 |
| CN 115384505 | A | 25-11-2022 | AU | 2017353698 A1 | 23-05-2019 |
| | | | CN | 110121453 A | 13-08-2019 |
| | | | CN | 115384505 A | 25-11-2022 |
| | | | EP | 3519266 A1 | 07-08-2019 |
| | | | JP | 7212233 B2 | 25-01-2023 |
| | | | JP | 7526248 B2 | 31-07-2024 |
| | | | JP | 2019536403 A | 12-12-2019 |
| | | | JP | 2023040053 A | 22-03-2023 |
| | | | WO | 2018085324 A1 | 11-05-2018 |

EPO FORM P0459

For more details about this annex : see Official Journal of the European Patent Office, No. 12/82